Europäisches Patentamt

European Patent Office

Office européen des brevets

(19)

(11) Numéro de publication: **0 280 605**
**A1**

## (12) DEMANDE DE BREVET EUROPEEN

(21) Numéro de dépôt: **88400274.2**

(22) Date de dépôt: **05.02.88**

(51) Int. Cl.⁴: **G 01 S 3/80**

(30) Priorité: **23.02.87 FR 8702329**

(43) Date de publication de la demande:
**31.08.88 Bulletin 88/35**

(84) Etats contractants désignés:
**BE CH DE GB IT LI LU NL SE**

(71) Demandeur: **ELECTRONIQUE SERGE DASSAULT**
**55, quai Marcel Dassault**
**F-92214 Saint-Cloud (FR)**

(72) Inventeur: **Rocle, Michel**
**45, rue Marx Dormoy**
**F-75018 Paris (FR)**

(74) Mandataire: **Plaçais, Jean-Yves et al**
**Cabinet Netter 40, rue Vignon**
**F-75009 Paris (FR)**

(54) Dispositif détecteur acoustique à capteur bidirectionnel.

(57) Une antenne acoustique, sensible horizontalement, est constituée d'un empilement vertical de capteurs bidirectionnels (D1 à DN), tels que des transducteurs à gradient de pression. Par des combinaisons linéaires des signaux issus des différents capteurs, on peut retrouver le signal incident dans chaque direction de l'espace, sous réserve de lever l'ambiguïté.

FIG.2

EP 0 280 605 A1

**Description**

<u>Dispositif détecteur acoustique à capteur bidirectionnel.</u>

L'invention concerne l'acoustique aérienne.

Cette technique consiste à mesurer la direction et la puissance de sources sonores. Elle utilise une antenne acoustique, constituée de plusieurs capteurs. Le traitement des signaux captés permet d'obtenir une "image" du milieu observé, et d'accéder par là aux caractéristiques des sources sonores qui s"y trouvent.

On connaît des antennes dites "à voie longitudinale", constituées d'un réseau linéaire horizontal de capteurs (transducteurs sonores) omnidirectionnels. Ces antennes présentent plusieurs inconvénients :

- l'ouverture du "faisceau principal de directivité" est proportionnelle à la fréquence;

- fonctionnement optimisé pour une bande de fréquences limitée, dans le meilleur des cas, à quelques octaves;

- encombrement prohibitif, lorsque l'énergie des signaux sonores à capter est située dans la partie basse du spectre audiofréquence.

La présente invention vient résoudre ce problème.

L'invention a notamment pour but d'apporter une antenne acoustique possédant un faisceau principal de directivité indépendant de la fréquence, et dépourvue de lobes secondaires.

L'invention a également pour but que l'antenne travaille sous un encombrement réduit, inférieur à 50 cm, pour des fréquences inférieures à 500-1000 Hz. L'antenne nouvelle s'étend dans une direction perpendiculaire à celle des antennes classiques, à voie longitudinale.

Le dispositif proposé est du type comprenant une série de capteurs-transducteurs acoustiques, répartis le long d'une direction choisie de l'espace. Les signaux perçus par de tels capteurs permettent de déterminer la direction et la puissance de sources émettrices dans un plan choisi de l'espace, qui est le plus souvent le plan horizontal.

Lorsqu'on veut travailler dans le plan horizontal avec une antenne à voie longitudinale, constituée d'une ligne de capteurs omnidirectionnels, il faut placer cette ligne de capteurs horizontalement. Et le phénomène utilisé pour la mesure est la différence du temps de trajet des ondes acoustiques entre la source située en un point donné de l'espace et les différents capteurs.

Le dispositif selon l'invention fonctionne tout à fait différemment.

Les capteurs sont des transducteurs bidirectionnels, du type dipôle, possédant un axe d'insensibilité, et des réponses en opposition de phase pour les signaux arrivant de part et d'autre de cet axe. Ces capteurs sont agencés selon une ligne qui est contenue dans le plan de l'espace à analyser. Pour travailler dans le plan horizontal, les capteurs sont donc disposés verticalement. Leurs axes d'insensibilité font l'objet d'un décalage angulaire progressif.

Ceci fournit des contributions décalées, en opposition de phase, permettant de déterminer la direction et la puissance des sources dans tout secteur choisi de l'espace, défini à partir de la ligne de capteurs.

Il est question ci-dessus de l'espace. On comprendra en effet que le fonctionnement d'un dispositif selon l'invention n'est pas limité à un seul plan horizontal. Il s'étend à toute source possédant une composante d'émission sonore dans le plan horizontal.

Avantageusement, les transducteurs sont du type à gradient de pression. De tels transducteurs peuvent être définis par une membrane plane, dont le plan définit l'axe d'insensibilité mentionné plus haut.

Selon un autre aspect de l'invention, le nombre de capteurs ainsi que le décalage angulaire entre capteurs sont choisis pour que le gain du dispositif demeure situé entre des limites prédéterminées, à l'intérieur du domaine d'espace traité par le dispositif.

A cet égard, les capteurs sont avantageusement distribués pour couvrir toutes les directions de l'espace.

Selon un autre aspect de l'invention, le dispositif comporte des moyens de traitement propres à effectuer des combinaisons linéaires des signaux issus des capteurs. Chaque combinaison linéaire est associée à un secteur choisi d'analyse.

Le dispositif est avantageusement complété par des moyens pour lever l'ambiguïté.

Enfin, la taille de l'alignement des capteurs est avantageusement choisie faible devant la longueur d'onde minimale des signaux à surveiller.

D'autres caractéristiques et avantages de l'invention apparaîtront à l'examen de la description détaillée ci-après, ainsi que des dessins annexés, sur lesquels :
- la figure 1 illustre schématiquement une antenne classique à voie longitudinale;
- la figure 2 illustre une antenne selon l'invention;
- la figure 3 illustre schématiquement les caractéristiques d'un capteur élémentaire utilisé dans l'antenne selon l'invention;
- la figure 4 est un diagramme de réponse d'un dispositif selon la figure 3A.
- la figure 5 est un schéma montrant le partage du diagramme de rayonnement de l'antenne acoustique selon l'invention par secteurs;
- la figure 6 est un diagramme montrant différents secteurs de l'antenne selon l'invention;

- la figure 7 est un schéma de principe des moyens de traitement associés à l'antenne selon l'invention; et

- la figure 8 est un schéma de principe de moyens permettant de lever l'ambiguïté.

Les dessins annexés comportent de nombreux éléments de caractère géométrique et/ou certain. En conséquence, ils pourront non seulement servir à mieux faire comprendre la description détaillée ci-après, mais aussi contribuer à la définition de l'invention, le cas échéant.

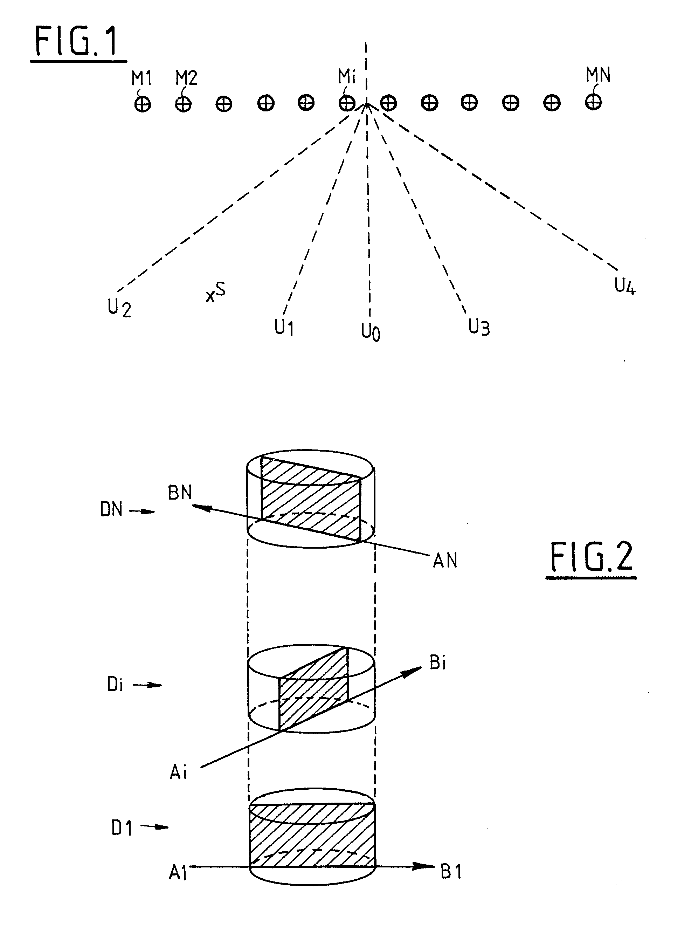

Sur la figure 1, l'antenne classique est constituée de microphones omnidirectionnels M1 à MN. La direction de la médiatrice du segment selon lequel sont distribués régulièrement les microphones est notée U0. Sous réserve d'un traitement convenable, ces microphones peuvent détecter sélectivement des sources présentes dans des directions différentes telles que U1, U2, U3 et U4.

Comme déjà indiqué, le principe de fonctionnement d'une telle antenne fait intervenir les différences de temps de parcours entre les ondes acoustiques provenant d'une source S, vis-à-vis des différents microphones. Or, la différence de temps de parcours provoque un déphasage qui dépend de la fréquence. Par le traitement, on va obtenir dans chaque direction explorée un "faisceau principal de directivité". Mais l'ouverture de ce faisceau est proportionnelle à la fréquence.

D'un autre côté, la sensibilité d'un tel dispositif dépend de l'écartement entre les microphones, d'une manière qui est elle aussi reliée à la fréquence. Si, comme ce sera souvent le cas, l'énergie des signaux étudiés est située dans la partie basse du spectre audiofréquence (en particulier la partie inférieure à 500 Hz), la dimension du réseau devient très grande. En pratique, on considère qu'elle doit être égale au moins à cinq fois la longueur d'onde maximale à percevoir.

Par ailleurs, il résulte de ce qui précède qu'une telle antenne ne peut être optimisée que pour une bande de fréquence limitée dans le meilleur cas à quelques octaves.

La figure 2 illustre, sous forme de vue schématique en perspective, une antenne selon l'invention. Elle est constituée de capteurs D1 à DN, superposés. Il s'agit de capteurs bidirectionnels possédant chacun une direction AB, dans laquelle ils sont insensibles, ou plus exactement en présence d'une sensibilité minimale, comme on le verra ci-après. Toutes choses égales par ailleurs, les signaux qu'ils fournissent pour des rayonnements acoustiques incidents venant de part et d'autre de cette direction AB vont se trouver en opposition de phase.

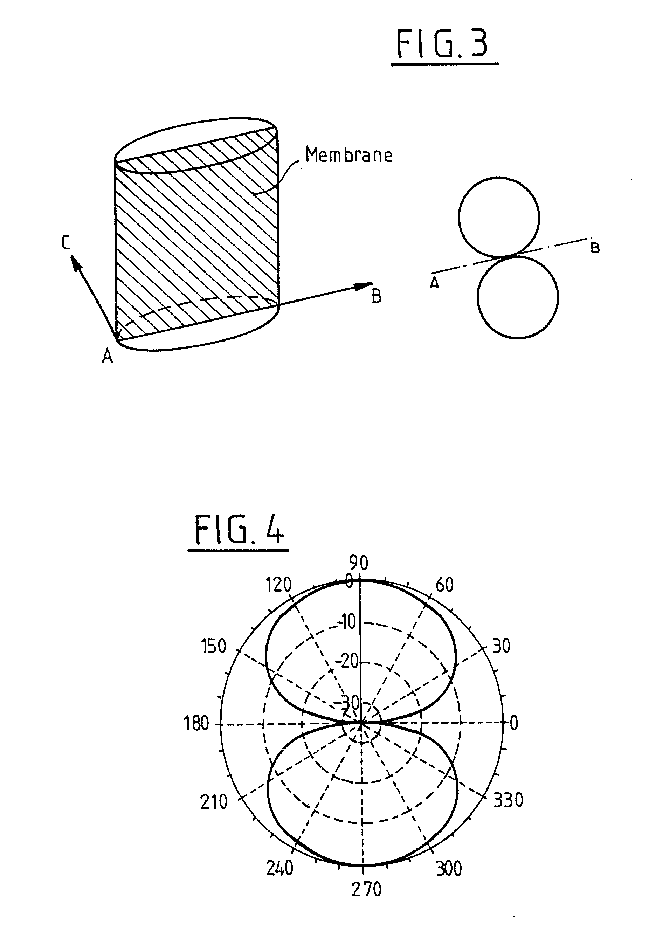

Un capteur élémentaire est détaillé sur la figure 3. Ce capteur se comporte comme un dipole, dont la frontière es délimitée par la membrane M.

Il peut s'agir de capteurs à gradient de pression, tels que le modèle Shopes MK8, fabriqué en République Fédérale d'Allemagne, et vendu en France par la Société ELNO.

La réponse de ces capteurs est plate entre 300 et 10 000 Hz environ. La fréquence de coupure peut donc être choisie à tout endroit désiré dans cette zone. De 50 à 300 Hz, ces capteurs possèdent une réponse qui augmente linéairement, d'environ 8 dB en tout. Cette courbe de réponse est définie à $\pm$ 2 dB.

La figure 4A illustre le diagramme de sensibilité angulaire d'un tel capteur. Le dessin montre que cette sensibilité se situe sur un intervalle de 10 dB, pour une fourchette d'angle qui va de $+20°$ à $+130°$. Les deux lobes illustrés correspondent, on le' rappelle, à des réponses en opposition de phase.

La figure 4B montre le diagramme de réjection de la même antenne. Ce diagramme fait apparaître que la sensibilité du capteur diminue pratiquement de 35 dB dans la direction dipolaire AB.

On notera dès maintenant que la présente invention n'est pas limitée au type de capteur énoncé ci-dessus. En effet, on peut imaginer différents autres équivalents permettant d'obtenir un capteur dipolaire, c'est-à-dire possédant une réponse en opposition de phase de part et d'autre d'un plan principal.

Dans la suite de la présente description, on supposera qu'il s'agit de déterminer la provenance de sources en gisement. Dès maintenant, il est indiqué qu'une directivité en site peut être obtenue de la même manière.

On admet que les signaux émis par les sources à détecter atteignent les capteurs sous forme d'ondes planes.

Le nombre de faisceaux bidirectionnels que l'on peut ainsi définir est égal au nombre N de capteurs. Et la largeur de ces faisceaux bidirectionnels est égale à 180° divisée par le nombre de capteurs.

Ceci vaut si l'on s'intéresse à toutes les directions pour l'exploration de l'espace dans un plan horizontal. Il est aisé de transposer cette relation si l'on s'intéresse à un secteur différent de 180° (ce qui correspond à 360°, compte tenu du caractère bidirectionnel des capteurs).

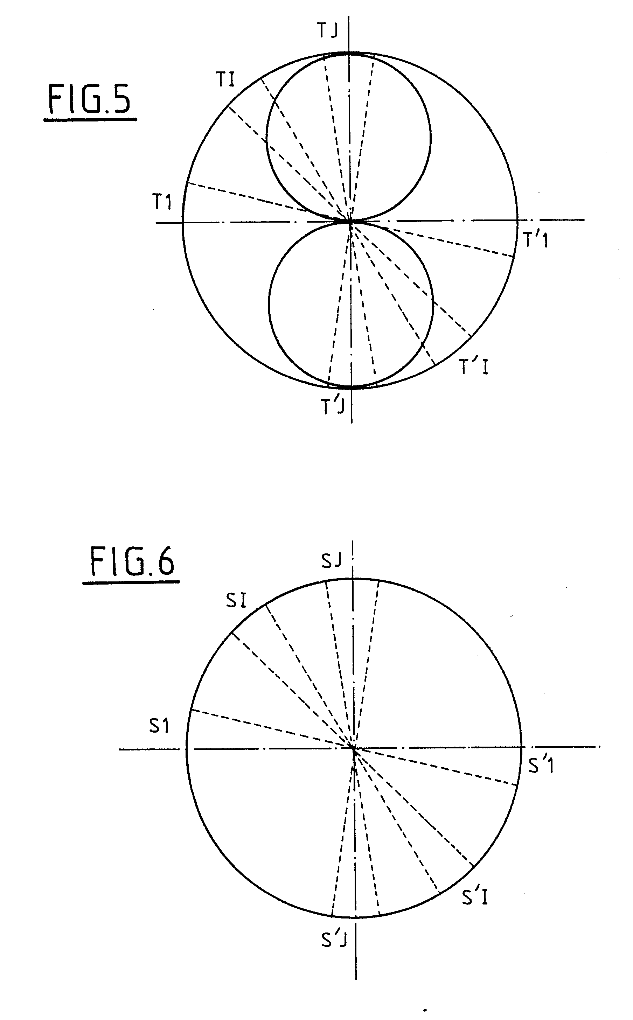

Ainsi (figure 6), on pourra définir un premier secteur S1, délimité par l'axe A1 et B1 d'un capteur et l'axe A2-B2 du suivant. On fait de même jusqu'au secteur Si délimité par les axes Ai, Bi et Ai + 1, Bi + 1, et ainsi de suite, jusqu'au secteur SN, défini par les axes AN-BN et A1-B1.

En fait, il existe dans chaque secteur deux sous-secteurs que l'on individualisera, pour rappeler que leurs réponses sont en opposition de phase. La figure 6 fait donc apparaître deux secteurs, respectivement S1 et S'1, entre les axes A1-B1 et A2-B2.

Ceci réalise une décomposition de l'espace compte tenu de la disposition géométrique des capteurs.

Il est maintenant fait référence à la figure 5. La réponse de chaque capteur va elle aussi être considérée sur deux N secteurs, tels que T1 à TN et T'1 à T'N, qui sont contenus dans son diagramme de rayonnement. On note que le diagramme de rayonnement est antisymétrique suivant l'axe AB, mais au contraire symétrique suivant l'axe AC.

On note maintenant G(1,1) le gain moyen du capteur 1 dans le secteur T1. Il s'en déduit que le gain du même capteur dans le secteur T'1 sera -G(1,1). En poursuivant cela, on aboutit au gain G1,N pour le capteur N°1

dans le secteur TN, et inversement -G(1,N) pour le gain moyen du même capteur dans le secteur T'N.

Cette notation peut être étendue aux autres capteurs, sous la forme G(p,q) où p désigne le rang du capteur et q la position angulaire du secteur considéré vis-à-vis du diagramme de rayonnement du capteur. Si tous les capteurs sont identiques, le coefficient de gain G(p,q) est indépendant de p.

On note maintenant B(i) le signal total reçu par le capteur de rang i. Le signal reçu dans la direction SI est noté AI. Le signal reçu dans la direction opposée S'I est noté A'I. Le signal total perçu par le capteur dans la direction concernée est donc :

CI = AI - A'I.

Il vient alors un jeu de N équations indépendantes à N inconnues, qui relie le signal total B(i) reçu par chaque capteur aux différents signaux CI perçus dans chacun des secteurs de l'espace.

Ces équations peuvent être écrites sous la forme matricielle donnée comme relation (I) dans la feuille annexe à la présente description contenant les formules.

Dans la mesure où le secteur S1 de l'espace coïncide avec le secteur de sensibilité T1 du premier capteur, la relation matricielle fait intervenir les coefficients +G(1,1) à +G(1,N) pour la relation entre le signal total B(1) reçu par le premier capteur et les signaux C(1) à C(N) reçus dans les différentes directions de l'espace.

Par contre, pour le second capteur, le premier terme sera en opposition de phase, alors que tous les autres seront en phase. Pour le troisième capteur, ce seront les deux premiers termes qui seront en opposition de phase, et ainsi de suite, jusqu'au dernier capteur où tous les termes sauf un sont en opposition de phase.

Les relations (II) montrent la définition des termes de la matrice tarée de la relation (I), sous forme générale.

A partir de là, il est clair que la relation (I) peut être écrite sous la forme matricielle pure donnée en relation (III). Par la simple inversion de matrice donnée dans la relation (IV), on voit immédiatement qu'il est possible de retrouver les contributions (C) des signaux individuels dans les différentes directions de l'espace, à partir des réponses totales B des différents capteurs.

Cela montre qu'il est possible de reconstruire le signal temporel issu des différents secteurs à partir des signaux reçus par l'ensemble des capteurs.

L'invention présente différents avantages, dont l'absence de lobes secondaires. A côté de cela, le faisceau de directivité s'affine si le nombre de capteurs augmente.

Il est souhaitable que le nombre de capteurs soit suffisant pour que les gains minimum et maximum dans chaque secteur ne soient pas trop éloignés du gain moyen dans le secteur.

Pour l'exemple de capteur donné plus haut, il faut 14 capteurs pour obtenir un écart maximum de 2 dB, avec protection anti-vent. Cela conduit à un faisceau de directivité de 12,9°.

Par ailleurs, il est clair que le fonctionnement du dispositif selon l'invention est indépendant de la fréquence, ce qui élimine la plupart des inconvénients des dispositifs antérieurs.

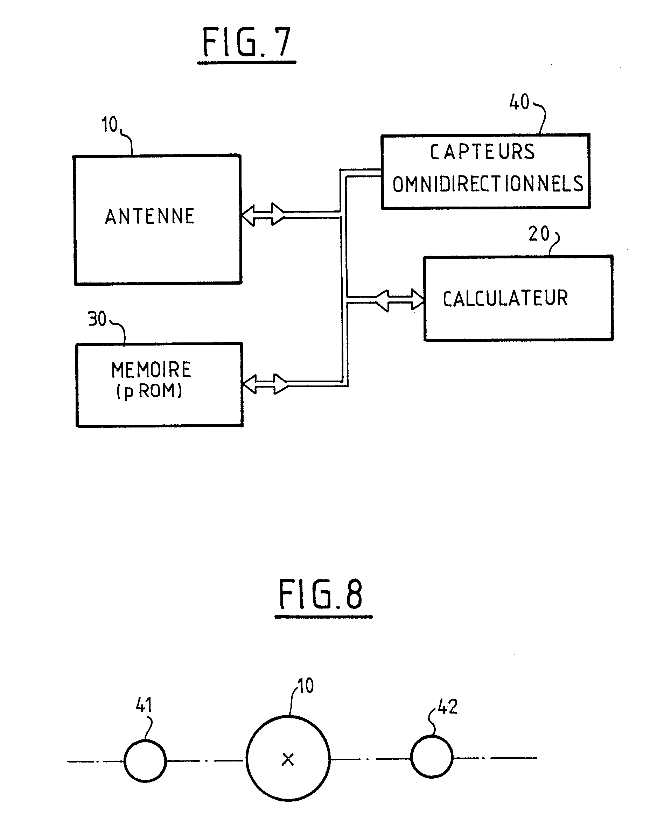

Le traitement requis par les relations données en annexe peut être effectué d'une manière très simple, à l'aide d'un dispositif dont le schéma de principe est donné sur la figure 7. Auparavant, on fera référence à la figure 8, qui concerne des moyens de levée d'ambiguité.

L'homme de l'art observera en effet que le faisceau obtenu est à lobes bidirectionnels. Si la direction du signal temporel recueilli dans chaque secteur est connue, il reste une ambiguité sur le sens. Pour lever cette ambiguité, il suffit de placer par exemple deux capteurs omnidirectionnels 41 et 42, de part et d'autre de l'empilement vertical 10 que forme l'antenne selon l'invention. Les différences de marches perçues par les deux capteurs suffisent pour lever l'ambiguité. Cependant, l'homme de l'art pourra concevoir d'autres moyens de levée d'ambiguité.

Sur la figure 7, les signaux issus de l'antenne 10 et des moyens de levée d'ambiguité 40 définis par les micros 41 et 42 de la figure 8 sont appliqués à un calculateur 20. Celui-ci contient dans une mémoire 30 les coefficients de calcul énoncés plus haut, ainsi que les paramètres utiles pour le fonctionnement des microphones 41 et 42. Par de simples opérations matricielles, de type connu, le calculateur peut délivrer en permanence des informations sur les signaux temporels reçus dans chaque direction de l'espace.

L'analyse fréquentielle peut se faire notamment par transformée de Fourier.

On comprendra que les coefficients G(p,q) mentionnés plus haut dépendent uniquement des caractéristiques des éléments constitutifs de l'antenne. Il en est de même pour ce qui concerne les capteurs bidirectionnels 41 et 42. Ces informations pourront donc être contenues dans une mémoire morte associée à l'antenne.

Par ailleurs, on peut imaginer une analyse plus fine des signaux reçus par les différents capteurs. Là encore les données utiles à cet effet seront incluses dans la mémoire morte 30.

## Annexe Formules

$$(I) \quad \begin{vmatrix} B(1) \\ B(2) \\ B(3) \\ \\ B(i) \\ \\ B(N) \end{vmatrix} = \begin{vmatrix} +G(1,1) & +G(1,2) & +G(1,3) & & G(1,N) \\ -G(2,N) & +G(2,1) & +G(2,2) & & G(2,N-1) \\ -G(3,N-1) & -G(3,N) & +G(3,1) & & G(3,N-2) \\ \\ -G(i,N+2-i) & -G(i,N+3-i) & & & \\ -G(i,N+4-i) & \ldots & +G(i,1) & & g(i,N+1-i) \\ \\ -G(N,2) & -G(N,3) & -G(N,4) & & G(N,1) \end{vmatrix} \begin{vmatrix} C(1) \\ C(2) \\ C(3) \\ \\ C(i) \\ \\ C(N) \end{vmatrix}$$

$$(II) \quad Giq = G(i,N+1+q-i) \quad \text{si } i < q$$
$$\phantom{(II) \quad} Giq = G(i,\ i-q+1) \quad\ \text{si } i \geqslant q$$

$$(III) \quad |B| = |G| \cdot |C|$$

$$(IV) \quad |C| = |G|^{-1} \cdot |B|$$

**Revendications**

1. Dispositif détecteur acoustique, du type comprenant une série de capteurs-transducteurs acoustiques (D1, Di, DN) répartis le long d'une direction choisie de l'espace, les signaux perçus par ces capteurs permettant de déterminer la direction et la puissance de sources émettrices dans un plan choisi de l'espace, en particulier le plan horizontal,

caractérisé en ce que les capteurs (D1, Di, DN) sont des transducteurs bidirectionnels du type dipôle possédant un axe d'insensibilité, et des réponses en opposition de phase pour les signaux arrivant de part et d'autre de cet axe, et

en ce que ces capteurs sont agencés selon une ligne, contenue dans le plan de l'espace à analyser, avec un décalage progressif en angle de leurs axes d'insensibilité, ce qui fournit des contributions décalées en opposition de phase permettant de déterminer la direction et la puissance des sources dans un secteur choisi de l'espace, centré sur la ligne de capteurs.

2. Dispositif selon la revendication 1, caractérisé en ce que les transducteurs (D1, Di, DN) sont du type à gradient de pression.

3. Dispositif selon la revendication 2, caractérisé en ce que les transducteurs possèdent une membrane dont le plan définit leur axe d'insensibilité.

4. Dispositif selon l'une des revendications 1 à 3, caractérisé en ce que le nombre de capteurs et le décalage angulaire sont choisis pour que le gain du dispositif demeure situé entre des limites prédéterminées.

5. Dispositif selon l'une des revendications 1 à 4, caractérisé en ce que les capteurs sont distribués pour couvrir toutes les directions de l'espace.

6. Dispositif selon l'une des revendications précédentes, caractérisé en ce qu'il comporte des moyens de traitement (20,30) propres à effectuer des combinaisons linéaires des signaux issus des capteurs, chaque combinaison linéaire correspondant à un secteur choisi d'analyse.

7. Dispositif selon l'une des revendications précédentes, caractérisé en ce qu'il compc'rte en outre des moyens (41, 42) pour lever l'ambiguité.

8. Dispositif selon l'une des revendications précédentes, caractérisé en ce que la taille de l'alignement de capteurs est faible devant la longueur d'onde minimale des signaux à surveiller.

FIG.1

FIG.2

## FIG.3

Membrane

C

A

B

## FIG. 4

FIG.5

FIG.6

# FIG.7

# FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 198 705  (MASSA)<br>* Colonne 2, ligne 53 - colonne 6, ligne 45; figures 1-4 *<br>--- | 1,5 | G 01 S    3/80 |
| A | US-A-3 711 820  (STARKEY)<br>--- | | |
| A | US-A-3 464 056  (TRESBOLD et al.)<br>----- | | |

DOMAINES TECHNIQUES
RECHERCHES (Int. Cl.4)

G 01 S
G 10 K

Le présent rapport a été établi pour toutes les revendications

| Lieu de la recherche | Date d'achèvement de la recherche | Examinateur |
|---|---|---|
| LA HAYE | 18-05-1988 | DEVINE J.J |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)